# EUROPÄISCHE PATENTSCHRIFT

(11) **EP 1 284 181 B1**
(45) Veröffentlichungstag und Bekanntmachung des Hinweises auf die Patenterteilung: **29.09.2004**
(21) Anmeldenummer: 02450168.6
(22) Anmeldetag: 31.07.2002
(51) Int. Cl.: B29C 47/90

(54) **Vorrichtung zum Kühlen und Kalibrieren eines extrudierten Kunststoffprofils, wobei zwischen den einzelnen Kalibrierleisten Spate sind**
Apparatus for cooling and calibrating an extruded plastic profile with gaps between the calibration bars
Dispositif de refroidissement et de calibrage de profilés en matière plastique extrudés, avec un espacement entre les barres de calibration

(30) Priorität: 10.08.2001 AT 12552001
(43) Veröffentlichungstag der Anmeldung: 19.02.2003
(73) Patentinhaber: A + G Extrusion Technology GmbH, 4061 Pasching (AT)
(72) Erfinder: Krumböck, Erwin, Dr., 4052 Ansfleden (AT); Gasselseder, Wolfgang, 4181 Oberneukirchen (AT)
(74) Vertreter: Hübscher, Helmut, Dipl.-Ing.

(56) Entgegenhaltungen:
- FR-A- 2 404 512
- US-A1- 2001 043 963
- US-B1- 6 244 847
- PATENT ABSTRACTS OF JAPAN vol. 2000, no. 25, 12. April 2001 (2001-04-12) & JP 2001 212872 A (SEKISUI CHEM CO LTD), 7. August 2001 (2001-08-07)

## Beschreibung

Die Erfindung bezieht sich auf eine Vorrichtung zum Kühlen und Kalibrieren eines extrudierten Kunststoffprofils mit einem eine Kühlflüssigkeit aufnehmenden, mit Unterdruck beaufschlagbaren Kühltank und mit wenigstens einer innerhalb des Kühltanks angeordneten Kalibriereinrichtung für das durch den Kühltank gezogene Kunststoffprofil, wobei die Kalibriereinrichtung aus einzelnen in Durchlaufrichtung des Kunststoffprofils verlaufenden Teilen zusammengesetzt ist.

Beim Extrudieren von Kunststoffprofilen wird der aus der formgebenden Profildüse austretende, heiße Profilstrang kalibriert und gekühlt, wobei zum Abkühlen ein Kühltank vorgesehen ist, durch den das Kunststoffprofil mit Hilfe einer dem Kühltank nachgeordneten Abzugseinrichtung gezogen wird. Innerhalb des Kühltanks wird das Kunststoffprofil mit einer Kühlflüssigkeit, im allgemeinen Wasser, beaufschlagt. Die Maßhaltigkeit wird dabei durch Kalibrierblenden sichergestellt, durch die das Kunststoffprofil innerhalb des Kühltankes geführt wird. Diese an die Querschnittsform des Kunststoffprofils angepaßten Kalibrierblenden sind auf der Eintrittsseite des Kühltanks mit geringem Abstand voneinander angeordnet, der sich gegen die Austrittsseite des Kühltanks hin allmählich vergrößert. Durch diese sich in Durchlaufrichtung vergrößernden Abstände zwischen den aufeinanderfolgenden Kalibrierblenden soll die Anzahl der Kalibrierblenden auf ein für die Sicherstellung der Maßhaltigkeit erforderliches Maß beschränkt werden. In diesem Zusammenhang ist zu bedenken, daß die Festigkeit und Formhaltigkeit des Kunststoffprofils im Eintrittsbereich des Kühltanks aufgrund der erst allmählich von außen nach innen fortschreitenden Erstarrung der Profilwände noch gering ist, so daß das Kunststoffprofil mit geringem axialen Abstand durch die Kalibrierblenden abgestützt werden muß, um ein Auswölben der Profilwände im Bereich von Hohlkammern zwischen den aufeinanderfolgenden Kalibrierblenden aufgrund der üblichen Unterdruckbeaufschlagung des Kühltanks zu vermeiden. Trotz der in Abhängigkeit von der erstarrungsbedingten Zunahme der Formbeständigkeit des Kunststoffprofils möglichen Vergrößerung der gegenseitigen Abstände der Kalibrierblenden bleibt jedoch die erforderliche Anzahl an Kalibrierblenden groß, was einen hohen Herstellungsaufwand für solche Kalibriereinrichtungen mit sich bringt. Beim Einrichten der aus einer Mehrzahl von Kalibrierblenden bestehenden Kalibriereinrichtung werden nämlich in mehreren Versuchen die Profilblenden anhand der bei diesen Versuchen festgestellten Abweichungen des Profilquerschnittes vom Sollquerschnitt nachgearbeitet, wobei sich der Aufwand für diese Nachbearbeitung mit der Anzahl der eingesetzten Kalibrierblenden vergrößert. Dies gilt insbesondere, wenn der Querschnitt der Profilblenden bereichsweise verkleinert werden muß, was häufig Verschiebungen von Einzelteilen der Kalibrierblenden zueinander, das Vorsehen zusätzlicher Einsätze und eine teilweise Neuanfertigung von Kalibrierblenden erfordert.

Anstelle von Kalibrierblenden werden auch Kalibriereinrichtungen eingesetzt, die einen mit Kühlmittel beaufschlagbaren Kühlblock mit einer durchgehenden Kalibrieröffnung bilden, durch die das Kunststoffprofil gezogen wird, wobei im Bereich der Kalibrieröffnung mündende Vakuumschlitze für ein Anliegen des Kunststoffprofils an der Wandung der Kalibrieröffnung sorgen. Zur Vereinfachung der Herstellung solcher Kalibriereinrichtungen ist es bekannt (DE 28 09 386 A1, DE 25 35 286 A1), die Kühlblöcke aus einzelnen in Durchlaufrichtung des Kunststoffprofils verlaufenden Teilen aufzubauen, die miteinander zu einem die Kalibrieröffnung bildenden Kühlblock verschraubt werden. Diese bekannten Kalibriereinrichtungen eignen sich allerdings kaum für eine unmittelbare Beaufschlagung des Kunststoffprofils mit Kühlflüssigkeit.

Der Erfindung liegt somit die Aufgabe zugrunde, eine Vorrichtung zum Kühlen und Kalibrieren eines extrudierten Kunststoffprofils der eingangs geschilderten Art so auszugestalten, daß die Kalibriereinrichtung aufgrund einer Verringerung des Konstruktionsaufwandes erheblich einfacher für ein Kunststoffprofil eingerichtet werden kann.

Die Erfindung löst die gestellte Aufgabe dadurch, daß die Teile der Kalibriereinrichtung Kalibrierleisten bilden, die unter Freilassung von Spalten für den Kühlflüssigkeitsdurchtritt über den Umfang des Kunststoffprofils verteilt sind.

Der Erfindung liegt die Erkenntnis zugrunde, daß es zur Kalibrierung eines extrudierten Kunststoffprofils in einem mit Unterdruck beaufschlagbaren Kühltank keiner umfangsgeschlossenen Abstützung des Kunststoffprofils bedarf, wenn nur für eine Abstützung in jenen Umfangsbereichen gesorgt wird, die aufgrund der Unterdruckbeaufschlagung zu einem Auswölben neigen. Dies ist im wesentlichen nur im Mittenbereich von vorhandene Hohlkammern begrenzenden Profilwänden der Fall, so daß die üblichen, umfangsgeschlossenen Kalibrierblenden durch Kalibrierleisten ersetzt werden können, die sich entlang der Kalibriereinrichtung in Durchlaufrichtung des Kunststoffprofils erstrecken und unter Freilassung von Spalten für den Kühlflüssigkeitsdurchtritt über den Umfang des Kunststoffprofils verteilt sind. Über die sich zwischen den Kalibrierleisten ergebenden Spalte ist eine unmittelbare Kühlung des Kunststoffprofils durch die Kühlflüssigkeit sichergestellt, also in jenen Bereichen, die aufgrund von Eckausbildungen oder Wandverbindungen einen höheren Kühlbedarf aufweisen. Die Kühlung der an den Kalibrierleisten anliegenden Mittenbereiche der vorhandene Hohlkammem begrenzenden Profilwände über die Kalibrierleisten reicht somit im Zusammenwirken mit der Flüssigkeitskühlung zwischen den Kalibrierleisten für eine Durcherstarrung des Kunststoffprofils während des Durchlaufs durch die Kalibriereinrichtung aus. Da durch die über die Kalibriereinrichtung durchgehenden Kalibrierleisten der zu kalibrierende Profilquerschnitt bestimmt wird, brauchen zur Anpassung der Kalibriereinrichtung an vorgegebene Verhältnisse lediglich die Kalibrierleisten nachgearbeitet zu werden, wodurch der Arbeitsaufwand für das Justieren der Kalibriereinrichtung erheblich verringert wird. Außerdem kann der Durchlaufwiderstand des Kunststoffprofils durch die Kalibriereinrichtung im Vergleich zu Kalibriereinrichtungen aus einzelnen Kalibrierblenden verringert werden.

Die Halterung der Kalibrierleisten in ihrer den Profilquerschnitt bestimmenden Zuordnung kann unterschiedlich konstruktiv gelöst werden. Besonders einfache Konstruktionsverhältnisse ergeben sich allerdings, wenn die Kalibrierleisten in wenigstens zwei quer zur Durchlaufrichtung angeordneten Rahmen lösbar befestigt sind, so daß die Kalibrierleisten zusammen mit den Rahmen ein ausreichend formstabiles, selbsttragendes Gestell bilden, ohne die Bearbeitung einzelner Kalibrierleisten zu behindern, die ja zu diesem Zweck aus den Rahmen gelöst werden können.

Wie bereits ausgeführt wurde, kann davon ausgegangen werden, daß die mittelbare Kühlung des Kunststoffprofils über die anliegenden Kalibrierleisten im Zusammenwirken mit der unmittelbaren Kühlung durch die Kühlflüssigkeit in vielen Fällen gute Kühlbedingungen schafft. Ist die Kühlleistung zu vergrößem, so können zumindest einzelne Kalibrierleisten auf den dem Kunststoffprofil zugekehrten Seiten quer zur Durchlaufrichtung verlaufende Kühlkanäle bilden, so daß die Kühlung im Bereich der Kalibrierleisten verstärkt wird. Verlaufen die Kühlkanäle gegenüber der Durchlaufrichtung geneigt, so ergibt sich über das durch die Kalibriereinrichtung gezogene Kunststoffprofil auf die Kühlflüssigkeit im Bereich der Kühlkanäle eine Förderwirkung, die eine weitere Verbesserung der Kühlung mit sich bringt. Es kann aber auch die mittelbare Kühlung über die Kalibrierleisten dadurch verstärkt werden, daß zumindest einzelne Kalibrierleisten Längsbohrungen aufweisen, die mit Kühlflüssigkeit beaufschlagt werden, wodurch für eine gute Abfuhr der von den Kalibrierleisten aufgenommenen Wärme gesorgt wird. Diese mit Kühlflüssigkeit beaufschlagten Längsbohrungen der Kalibrierleisten können zusätzlich mit Kühlkanälen der Kalibrierleisten in Strömungsverbindung stehen, um im Bereich dieser Kühlkanäle einen Zwangsumlauf der Kühlflüssigkeit zu erreichen.

In der Zeichnung ist der Erfindungsgegenstand beispielsweise dargestellt. Es zeigen
- Fig. 1: eine erfindungsgemäße Vorrichtung zum Kühlen und Kalibrieren eines extrudierten Kunststoffprofils in einem schematischen Längsschnitt,

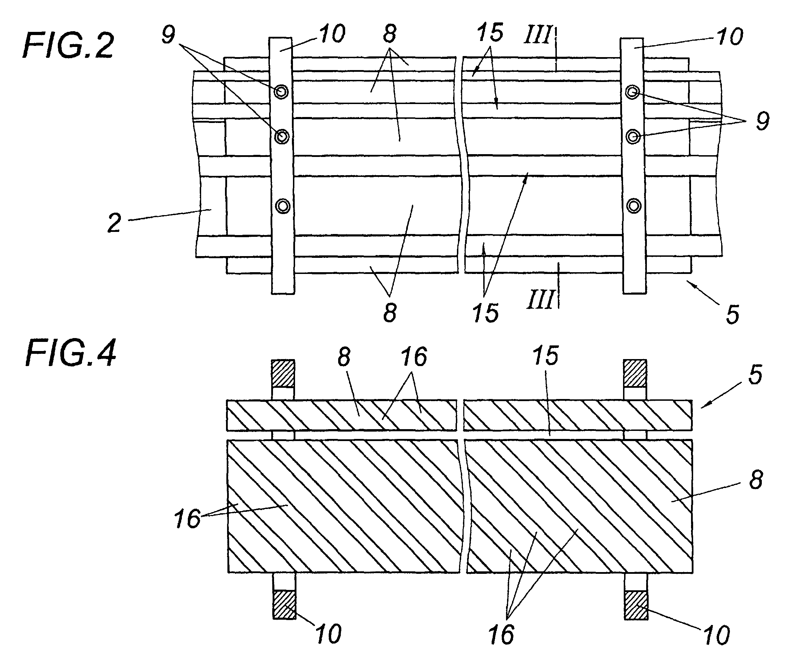

- Fig. 2: eine in einem Kühltank einsetzbare Kalibriereinrichtung in einer schematischen Seitenansicht in einem größeren Maßstab,
- Fig. 3: einen Schnitt nach der Linie III-III der Fig. 2 in einem größeren Maßstab,
- Fig. 4: einen Schnitt nach der Linie IV-IV der Fig. 3 in einem kleineren Maßstab und
- Fig. 5: eine Ausführungsform einer zusätzlich gekühlten Kalibrierleiste im Querschnitt in einem größeren Maßstab.

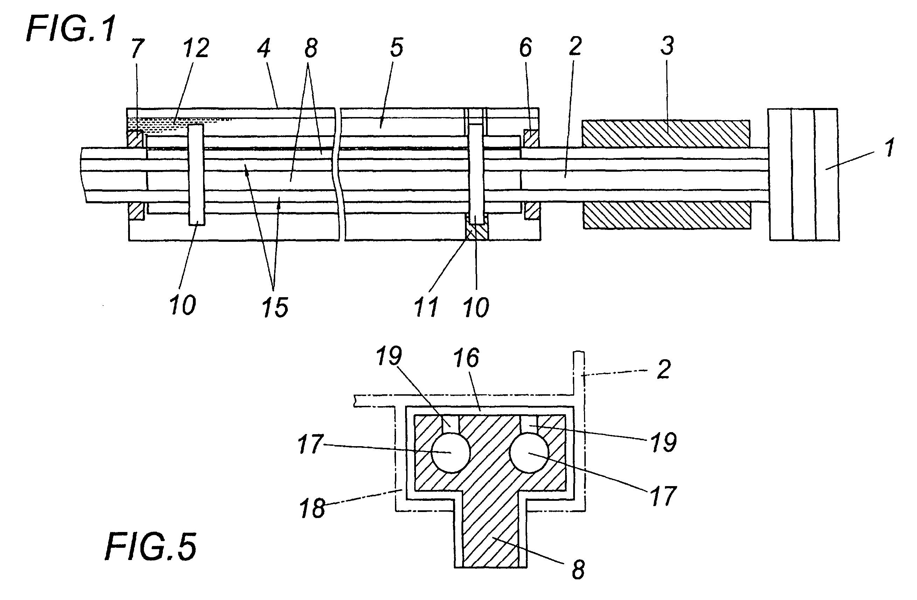

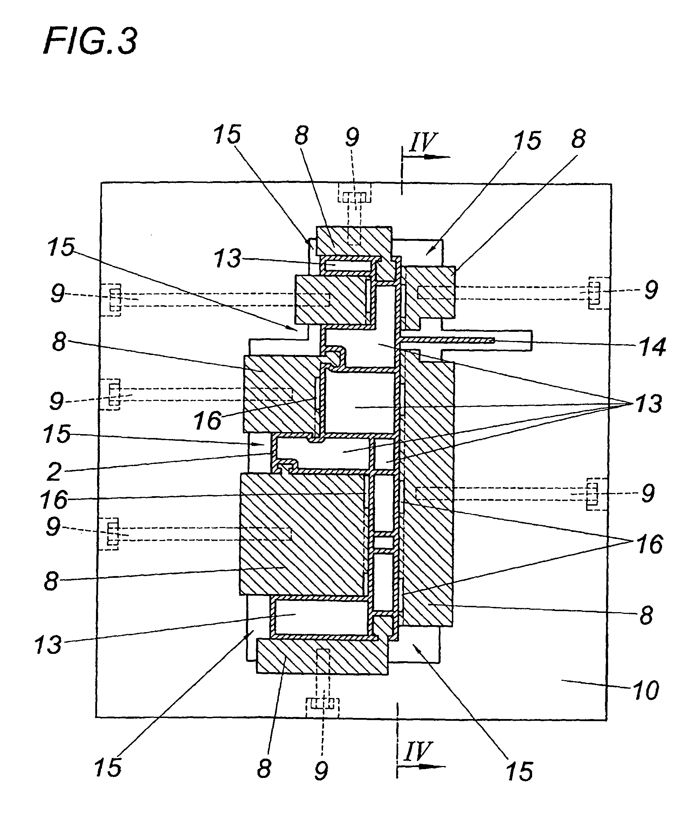

Wie der Fig. 1 entnommen werden kann, wird das aus einer Profildüse 1 im Anschluß an einen Extruder austretende, heiße Kunststoffprofil 2 durch einen Trockenkalibrator 3 gezogen, bevor es einen Kühltank 4 durchläuft, in dem wenigstens eine Kalibriereinrichtung 5 vorgesehen ist, um die Maßhaltigkeit des Kunststoffprofils 2 auch beim Abkühlen sicherzustellen. Die zwischen einer Eintrittsblende 6 und einer Austrittsblende 7 für das Kunststoffprofil 2 angeordnete Kalibriereinrichtung 5 besteht im wesentlichen aus einzelnen Kalibrierleisten 8, die über die Länge der Kalibriereinrichtung 5 durchgehen und mit Abstand voneinander um das Kunststoffprofil 2 verteilt angeordnet sind, wie dies insbesondere der Fig. 3 entnommen werden kann. Diese Kalibrierleisten 8 werden mit Hilfe von Befestigungsschrauben 9 lösbar in quer zum Kunststoffprofil 2 angeordneten Rahmen 10 gehalten, die zur Aufnahme der Kalibrierleisten 8 entsprechende Aussparungen aufweisen. Zur axialen Festlegung eines der Rahmen 10 gegenüber dem Kühltank 4 kann dieser Rahmen gemäß der Fig. 1 in eine Führung 11 eingesetzt sein. Der Kühltank 4 ist mit einer Kühlflüssigkeit 12 gefüllt, die die Kalibriereinrichtung 5 abdeckt. Der geschlossene Kühltank 4 wird mit Unterdruck beaufschlagt, so daß das durch den Kühltank 4 und innerhalb des Kühltanks 4 durch die Kalibriereinrichtung 5 gezogene Kunststoffprofil 2 im Bereich seiner Hohlkammem 13 nach außen an die Kalibrierleisten 8 angedrückt wird. Aus konstruktiven Gründen kann es bei längeren Kühltanks 4 erforderlich werden, die Kalibrierleisten 8 auf zwei oder mehrere Kalibriereinrichtungen 5 aufzuteilen, die in Durchlaufrichtung unmittelbar aufeinander folgen.

Obwohl die Kalibrierleisten 8 das Kunststoffprofil 2 nicht vollständig umschließen, wird eine ausreichende Abstützung des Kunststoffprofils 2 für eine maßhaltige Abkühlung erreicht. In diesem Zusammenhang ist ja zu bedenken, daß sich die Profilwände im Bereich der Hohlkammern 13 lediglich in ihrem mittleren Bereich und nicht im Anschlußbereich an Querwände oder Ecken auswölben, weil im Eckbereich bzw. im Anschlußbereich von Querwänden das Kunststoffprofil 2 eine entsprechende Versteifung erfährt. Ist das zu kühlende Kunststoffprofil 2 mit abstehenden Stegen 14 versehen, so können diese Stege 14 je nach den gegebenen Verhältnissen ohne Abstützung durch Kalibrierleisten abgekühlt werden, wie dies in der Fig. 3 eingezeichnet ist. Im Bedarfsfall können solche Stege 14 aber auch auf einer Seite und in Sonderfällen auch beidseitig durch Kalibrierleisten geführt werden.

Die Spalte 15 zwischen den Kalibrierleisten 8 sind für die unmittelbare Kühlung des Kunststoffprofils 2 durch die Kühlflüssigkeit 12 erforderlich. Im Bereich der anliegenden Kalibrierleisten 8 ist ja lediglich eine unmittelbare Kühlung über die Kalibrierleisten 8 möglich. Reicht diese unmittelbare Kühlung über die Kalibrierleisten 8 im Bereich der Anlagefläche nicht aus, so können die Kalibrierleisten 8 auf der dem Kunststoffprofil 2 zugekehrten Seite mit Kühlkanälen 16 versehen sein, die durch Nuten in den Kalibrierleisten 8 gebildet werden und vorzugsweise geneigt zur Durchlaufrichtung des Kunststoffprofils 2 verlaufen. Aufgrund dieser in der Fig. 4 angedeuteten, geneigten Anordnung der Kühlkanäle 16 ergibt sich im Bereich der Kühlkanäle 16 durch das durch die Kalibriereinrichtung 5 gezogene Kunststoffprofil 2 eine Förderwirkung auf die Kühlflüssigkeit 12, wodurch die Kühlwirkung unterstützt wird.

Wie der Fig. 5 entnommen werden kann, können die Kalibrierleisten 8 selbst gekühlt werden, indem die Kalibrierleisten 8 mit Längsbohrungen 17 versehen werden, durch die Kühlflüssigkeit gepumpt wird. Dienen solche Kalibrierleisten 8 zur Führung des Kunststoffprofils 2, beispielsweise im Bereich hinterschnittener Profilnuten 18, wie dies in der Fig. 5 strichpunktiert dargestellt ist, so können die Kalibrierleisten 8 im Bereich der hinterschnittenen Nuten 18 mit quer zur Durchlaufrichtung verlaufenden Kühlkanälen 16 versehen sein, die mit den Längsbohrungen 17 über Querbohrungen 19 in Strömungsverbindung stehen, so daß über die Kühlkanäle 16 Kühlflüssigkeit zur unmittelbaren Kühlung der hinterschnittenen Nuten 18 gepumpt werden kann.

Durch die geschilderten Maßnahmen kann mit einem vergleichsweise geringen Konstruktionsaufwand die Kühlung und Kalibrierung von Kunststoffprofilen 2 in einem Kühltank 4 vorgenommen werden, wobei sich der zusätzliche Vorteil einer kontinuierlichen Profilabstützung in Durchlaufrichtung ergibt. Es braucht lediglich das abkühlungsbedingte Schrumpfen des Kunststoffprofils 2 über die Kalibrierleisten 8 berücksichtigt zu werden, um nicht nur den Konstruktionsaufwand zu verringern, sondern auch die Maßhaltigkeit zu verbessern.

## Patentansprüche

1. Vorrichtung zum Kühlen und Kalibrieren eines extrudierten Kunststoffprofils (2) mit einem eine Kühlflüssigkeit (12) aufnehmenden, mit Unterdruck beaufschlagbaren Kühltank (4) und mit wenigstens einer innerhalb des Kühltanks (4) angeordneten Kalibriereinrichtung (5) für das durch den Kühltank (4) gezogene Kunststoffprofil (2), wobei die Kalibriereinrichtung (5) aus einzelnen in Durchlaufrichtung des Kunststoffprofils (2) verlaufenden Teilen zusammengesetzt ist, **dadurch gekennzeichnet, daß** die Teile der Kalibriereinrichtung (5) Kalibrierleisten (8) bilden, die unter Freilassung von Spalten (15) für den Kühlflüssigkeitsdurchtritt über den Umfang des Kunststoffprofils (2) verteilt sind.

2. Vorrichtung nach Anspruch 1, **dadurch gekennzeichnet daß** die Kalibrierleisten (8) im Bereich von Hohlkammem (13) des Kunststoffprofils (2) vorgesehen sind.

3. Vorrichtung nach Anspruch 1 oder 2, **dadurch gekennzeichnet daß** die Kalibrierleisten (8) in wenigstens zwei quer zur Durchlaufrichtung angeordneten Rahmen (10) lösbar befestigt sind.

4. Vorrichtung nach einem der Ansprüche 1 bis 3, **dadurch gekennzeichnet, daß** zumindest einzelne Kalibrierleisten (8) auf den dem Kunststoffprofil (2) zugekehrten Seiten quer zur Durchlaufrichtung verlaufende Kühlkanäle (16) bilden.

5. Vorrichtung nach Anspruch 4, **dadurch gekennzeichnet, daß** die Kühlkanäle (16) gegenüber der Durchlaufrichtung geneigt verlaufen.

6. Vorrichtung nach einem der Ansprüche 1 bis 5, **dadurch gekennzeichnet, daß** zumindest einzelne Kalibrierleisten (8) in an sich bekannter Weise mit Kühlflüssigkeit (12) beaufschlagbare Längsbohrungen (17) aufweisen, die mit Kühlkanälen (16) auf den dem Kunststoffprofil (2) zugekehrten Seiten der Kalibrierleisten (8) strömungsverbunden sind.

## Claims

1. A device for cooling and calibrating an extruded plastic profile (2) comprising a cooling tank holding a cooling liquid (12) and adapted to be subjected to negative pressure, at least one device (5) being disposed in the tank (4) for calibrating the plastic profile (2) drawn through the tank (4), wherein the calibration device (5) is made up of individual parts extending in the direction of motion of the plastic profile (2), **characterised in that** the parts of the calibration device (5) are in the form of strips (8) which are distributed around the periphery of the plastic profile (2) leaving gaps (15) for the cooling liquid to flow through.

2. A device according to claim 1, **characterised in that** the calibration strips (8) are provided near cavities or chambers (13) in the plastic profile (2).

3. A device according to claim 1 or 2, **characterised in that** the calibration strips (8) are releasably secured in at least two frames (10) disposed transversely of the direction of flow.

4. A device according to any of claims 1 to 3, **characterised in that** on the sides facing the plastic profile (2) at least individual calibration strips (8) form cooling ducts (16) extending transversely of the direction of flow.

5. A device according to claim 4, **characterised in that** the cooling ducts (16) extend at an angle to the direction of flow.

6. A device according to any of claims 1 to 5, **characterised in that** at least individual calibration strips (8) are formed in known manner with longitudinal bores (17) for supplying with cooling liquid (12) and connected for flow purposes to cooling ducts (16) on the sides of the calibration strips (8) facing the plastic profile (2).

## Revendications

1. Dispositif de refroidissement et de calibrage d'un profilé extrudé (2) en matière synthétique, avec un réservoir de refroidissement (4) recevant un liquide de refroidissement (12), sollicité par une pression négative, et au moins un dispositif de calibrage (5) disposé à l'intérieur du réservoir de refroidissement (4) pour le profilé en matière synthétique (2), passé sous traction à travers le réservoir de refroidissement (4), sachant que le dispositif de calibrage (5) est composé de différentes parties s'étendant dans la direction de passage du profilé en matière synthétique (2), **caractérisé en ce que** les parties du dispositif de calibrage (5) forment des bandes de calibrage (8) qui sont réparties sur la périphérie du profilé en matière synthétique (2), en laissant dégager des intervalles (15) pour le passage du liquide de refroidissement.

2. Dispositif selon la revendication 1, **caractérisé en ce que** les bandes de calibrage (8) sont prévues dans la zone de chambres creuses (13) du profilé en matière synthétique (2).

3. Dispositif selon la revendication 1 ou 2, **caractérisé en ce que** les bandes de calibrage (8) sont fixées de façon désolidarisable en au moins deux cadres (10), disposés transversalement par rapport à la direction de passage.

4. Dispositif selon l'une des revendications 1 à 3, **caractérisé en ce qu'**au moins des bandes de calibrage (8) individuelles forment, sur les côtés tournés vers le profilé en matière synthétique (2), des canaux de refroidissement (16) s'étendant transversalement par rapport à la direction de passage.

5. Dispositif selon la revendication 4, **caractérisé en ce que** les canaux de refroidissement (16) s'étendant de façon inclinée par rapport à la direction de passage.

6. Dispositif selon l'une des revendications 1 à 5, **caractérisé en ce qu'**au moins des bandes de calibrage (8) individuelles, de manière connue en soi, présentent des perçages oblongs (17), pouvant être sollicités par du liquide de refroidissement (12) et reliés fluidiquement à des canaux de refroidissement (16), sur les côtés, tournés vers le profilé en matière synthétique (2), des bandes de calibrage (8).
